# FASCICULE DE BREVET EUROPEEN

(11) **EP 3 703 485 B1**
(45) Date de publication et mention de la délivrance du brevet: **22.06.2022**
(21) Numéro de dépôt: 18788814.4
(22) Date de dépôt: 24.09.2018
(51) Int. Cl.: A01D 46/26

(54) **DISPOSITIF À BÂCHE DE COLLECTE DE FRUITS ET MACHINE AGRICOLE POURVUE DU DISPOSITIF**
VORRICHTUNG MIT EINER PLANE ZUM ERNTEN VON FRÜCHTEN UND LANDWIRTSCHAFTLICHE MASCHINE MIT DIESER VORRICHTUNG
DEVICE HAVING A TARPAULIN FOR COLLECTING FRUIT AND AGRICULTURAL MACHINE PROVIDED WITH THE DEVICE

(30) Priorité: 31.10.2017 FR 1771147
(43) Date de publication de la demande: 09.09.2020
(73) Titulaire: PELLENC, 84120 Pertuis (FR)
(72) Inventeur: ROLLAND, Christian, 84160 Cucuron (FR); GIACALONE, Christophe, 83470 Saint Maximin La Sainte Baume (FR)
(74) Mandataire: Weber, Etienne Nicolas
(86) Numéro de dépôt international: PCT/FR2018/052335
(87) Numéro de publication internationale: WO 2019/086774

(56) Documents cités:
- ES-U- 1 066 325
- FR-A1- 2 448 847
- FR-A1- 2 556 924
- FR-A1- 3 013 180

## Description

### Domaine technique

La présente invention concerne un dispositif de collecte de fruits et en particulier pour la collecte de petits fruits tels que des olives, des cerises, des noix ou des amandes, susceptibles d'être détachés des arbres par secouage ou gaulage. Il s'agit plus précisément d'un dispositif de collecte à bâche ou à filet, la bâche ou le filet étant destinés à être disposés sous un arbre pour en recueillir les fruits tombés sous l'effet d'un secouage de l'arbre ou de ses branches ou encore sous l'effet d'un gaulage des fruits. La bâche ou le filet sont ensuite repliés ou enroulés vers le dispositif de collecte en entrainant les fruits tombés vers un réceptacle du dispositif de collecte.

L'invention concerne également une machine agricole pour la collecte de fruits pourvue d'un tel dispositif de collecte à bâche.

L'invention trouve des applications dans le domaine de l'arboriculture fruitière et en particulier de l'oléiculture. de la pruniculture et de la nuciculture fruitière, pour la récolte des fruits.

### Etat de la technique antérieure

Dans la suite du texte, le terme « bâche » désigne indifféremment une bâche de collecte, un filet de collecte, ou tout objet présentant une surface de collecte apte à être utilisé dans le dispositif de collecte de fruits de l'invention.

L'état de la technique antérieure peut être illustré par les documents suivants :
FR2556924
FR2448847
FR3013180
FR2905051
US5580635

Le document US5580635 montre une bâche de collecte de fruits disposée manuellement sous un arbre pour recueillir les fruits suite à une opération de secouage ou de gaulage. La bâche présente sur l'un de ses côtés un repli formant une poche. Ainsi, lors d'un repli de la bâche, un utilisateur peut rassembler progressivement les fruits tombés sur la bâche dans la poche.

Les documents FR2556924 et FR3013180 montrent des machines agricoles attelées et montées sur roues, comportant une bâche solidaire d'un tambour d'enroulement.

Afin de récolter les fruits d'un arbre, la bâche est déroulée du tambour, la machine étant immobilisée à proximité de l'arbre. La bâche est étendue au sol, sous l'arbre, en utilisant des chariots circulants dérouleurs pourvus de roues pour un roulage au sol. Les chariots dérouleurs fixés à l'extrémité libre de la bâche permettent d'exercer sur la bâche une traction propre à la dérouler du tambour et la tirer sous l'arbre. La bâche est de préférence fendue de manière à pouvoir s'étendre de part et d'autre d'un tronc de l'arbre.

Après l'extension de la bâche sous l'arbre, un secouage ou un gaulage permet de faire tomber les fruits de l'arbre sur la bâche. Bien que cette opération puisse être faite manuellement, elle est de préférence opérée en utilisant un secoueur motorisé portable, ou en ayant recours à des engins mobiles de secouage, motorisés et autonomes. Ces engins sont pourvus d'une pince de saisie du tronc des arbres et configurée pour le secouage du tronc. Les engins de secouage peuvent circuler, le cas échéant, sur la bâche, lorsqu'elle est étendue pour accéder au tronc.

Après le secouage de l'arbre, un moteur d'enroulement agit sur le tambour pour enrouler la bâche sur le tambour. L'enroulement de la bâche a pour effet d'acheminer les fruits tombés sur celle-ci vers un réceptacle du dispositif de collecte. Pour éviter un roulement excessif des fruits sur la bâche et accompagner leur acheminement vers le réceptacle, la bâche peut être pourvue de nervures transversales à la direction de l'enroulement, c'est-à-dire, parallèles à l'axe du tambour d'enroulement. L'enroulement a lieu par le dessus du tambour de manière à faire tomber les fruits dans un réceptacle ménagé sous le tambour.

On peut d'ailleurs noter ici que la position de la bâche sur le haut du tambour est toujours plus haute que la position de la bâche au voisinage des chariots, forçant les fruits collectés à s'accumuler d'abord sur les nervures transversales pour ensuite les dépasser et s'accumuler de préférence sur la zone de la bâche située vers les chariots dérouleurs. Leur accumulation successive renforce alors les risques de fuite de fruits vers les parties latérales de la bâche lors de son enroulement.

Les chariots dérouleurs sont ainsi configurés de préférence de manière à surélever l'extrémité libre de la bâche de manière à éviter que des fruits ne roulent hors de la bâche par son extrémité libre. En outre, une plateforme peut être prévue pour un relevage des chariots dérouleurs en fin d'enroulement, de manière à parachever le déversement des fruits dans le réceptacle.

Le document FR2905051 montre une machine comparable dans laquelle les chariots dérouleurs circulants destinés au déroulement de la bâche sont remplacés par des chariots à pantographe.

Le fonctionnent des machines de collecte décrites ci-dessus peut présenter un certain nombre de difficultés qui se manifestent notamment dans le cas du positionnement de la bâche sur un terrain avec une forte déclivité dans le sens transversal de la bâche.

Parmi ces difficultés on peut relever les suivantes :
- A l'enroulement de la bâche des fruits ont tendance à quitter la bâche par les côtés latéraux, c'est-à-dire les côtés parallèles à la direction d'enroulement et perpendiculaires à l'axe d'enroulement. En effet, les fruits sont soumis à la gravité, et leur forme ovoïde et rigide les conduit à rouler dans le sens de la déclivité.
- Il n'est pas possible de pourvoir la bâche de rebords empêchant les fruits de la quitter, d'une part dans la mesure où des engins secoueurs sont susceptibles de circuler sur la bâche, et d'autre part du fait qu'un rebord empêchant le débordement des fruits de la bâche présenterait une épaisseur relativement importante qui rendrait complexe l'enroulement de la bâche de collecte sur le tambour.

De par leur poids et les contraintes générées par le secouage, les engins secoueurs viendraient détruire un éventuel rebord de la bâche ou des barrages ménagés sur la bâche. Seules de légères nervures de faible épaisseur sont possibles. De telles nervures sont toutefois inefficaces lorsque la quantité de fruits récoltés est importante, lorsque le terrain est accidenté ou lorsque sa déclivité est importante.

### Exposé de l'invention

L'invention a pour but de proposer un dispositif de collecte de fruits et une machine de collecte de fruits permettant d'obvier les difficultés mentionnées ci-dessus.

Un but est en particulier de proposer une solution au roulage des fruits hors de la bâche, notamment lors de l'enroulement de la bâche, qui soit compatible avec la circulation sur la bâche d'engins de secouage, lorsque la bâche est étendue.

Un but est en particulier de proposer une telle solution efficace tant sur un terrain plat que sur un terrain présentant une déclivité.

L'invention a encore pour but de proposer un dispositif de collecte comprenant des chariots dérouleurs simplifiés, allégés et ne nécessitant pas de dispositif de relevage pour assurer le vidage des fruits en fin d'enroulement de la bâche, tout en garantissant un rassemblement efficace de fruits en cours d'enroulement de la bâche.

Enfin un but est de limiter, voire d'éviter un déversement de fruits par le bord libre de la bâche relié aux chariots dérouleurs lorsque la charge de la bâche et/ou la déclivité du terrain à partir du dispositif de collecte est importante.

Pour atteindre ces buts l'invention concerne un dispositif de collecte de fruits, à bâche, comprenant :
- un enrouleur de bâche, de préférence motorisé, agencé selon un axe d'enroulement,
- au moins une bâche avec un bord longitudinal d'enroulement relié à l'enrouleur de bâche et s'étendant parallèlement à l'axe d'enroulement, et un bord longitudinal libre, opposé au bord longitudinal d'enroulement, et des bords latéraux s'étendant entre le bord longitudinal d'enroulement et le bord longitudinal libre, la bâche pouvant être sélectivement enroulée sur l'enrouleur et déployée au sol dans une position de collecte de fruits.
- au moins un chariot dérouleur, le chariot dérouleur étant pourvu d'un dispositif de fixation du bord longitudinal libre de la bâche.

Conformément à l'invention la bâche comporte au moins une nervure de tension s'étendant le long de la bâche, entre le bord longitudinal d'enroulement et le bord longitudinal libre, la nervure de tension étant fixée au chariot dérouleur par l'intermédiaire respectivement d'un tendeur distinct du dispositif de fixation du bord longitudinal libre de la bâche.

L'utilisation d'un tendeur distinct du dispositif de fixation de la bâche permet d'exercer sélectivement sur la nervure une tension orientée perpendiculairement à l'axe d'enroulement, c'est-à-dire parallèlement aux bords latéraux de la bâche, dans le cas d'une bâche rectangulaire. La tension exercée le long de la nervure provoque un soulèvement local de la bâche le long de la nervure depuis le chariot dérouleur et en direction de l'enrouleur. Or le soulèvement de la bâche forme ainsi localement un barrage empêchant les fruits tombés sur la bâche de franchir la nervure.

Lorsque plusieurs nervures sont prévues, la mise sous tension des nervures permet de constituer autant de barrages s'étendant perpendiculairement à l'axe d'enroulement. Entre deux nervures sous tension, et surélevées par rapport au sol, se trouve un pan de bâche sur lequel s'exerce une tension moindre et qui repose au sol dans la position de collecte de fruits. Ce pan constitue ainsi un couloir ou une cuvette dans laquelle les fruits peuvent s'accumuler, et dans lequel les fruits restent contenus lors de l'enroulement de la bâche.

Bien qu'il soit possible de ne prévoir qu'une seule nervure de tension, par exemple pour éviter un déversement latéral des fruits sur l'un des côtés latéraux de la bâche, il est préférable de prévoir plusieurs nervures de tension. En particulier il peut être avantageux de prévoir une nervure de tension s'étendant le long de chaque bord latéral de la bâche, pour éviter une perte de fruits lors de l'enroulement, lorsque le terrain présente une pente dans le sens transversal de la bâche.

Dans la description qui suit il est fait référence indifféremment à une seule ou à une pluralité de nervures de tension sans préjuger du nombre de nervures de tension.

Dans une configuration préférée le dispositif peut comporter une pluralité de nervures de tension s'étendant parallèlement aux bords latéraux de la bâche et perpendiculairement à l'axe d'enroulement lorsque la bâche est dans une position de collecte de fruits.

En effet, il est possible de prévoir entre les nervures de tension le long des bords latéraux, des nervures de tension intermédiaires. Ceci permet de former plusieurs "couloirs" de fruits entre deux nervures sous tension.

Bien qu'un léger angle des nervures de tension soit possible, leur agencement perpendiculaire à l'axe d'enroulement est préféré pour éviter des tensions transverses sur la bâche et des faux plis qui pourraient en résulter, notamment lors de l'enroulement de la bâche.

Lorsque des nervures de tension sont prévues le long de chaque bord latéral de la bâche, celles-ci sont de préférence reliées au chariot dérouleur respectivement par un tendeur élastique.

L'utilisation d'un tendeur élastique permet de garantir en toute circonstance une tension plus grande sur les nervures de tension latérale et donc un soulèvement plus important des bords latéraux de la bâche. Cette mesure permet de mieux garantir encore le maintien des fruits sur la bâche lors de l'enroulement.

La nervure de tension de la bâche est matérialisée de préférence par un renforcement de la bâche, de manière à éviter un déchirement de la bâche en raison de la tension appliquée à la nervure de tension. En particulier, la nervure de tension peut comporter au moins l'un parmi une couture de la bâche, un repli de la bâche, une sangle solidaire de la bâche, une bande de matière plastique solidaire de la bâche, un ourlet de la bâche, et une armature de la bâche.

Les renforcements de la bâche le long des nervures de tension sont de préférence des renforcements souples et non cassants. Ceci permet aux engins mobiles de secouage de circuler librement sur la bâche, y compris au-dessus des nervures de tension, sans risquer de les abîmer.

Selon une réalisation particulière du dispositif, le tendeur est relié â la nervure de tension à distance du bord longitudinal libre de la bâche. En cas d'une pluralité de tendeurs, chaque tendeur est respectivement associé à une nervure de tension de la bâche et fixé à distance du bord longitudinal libre de la bâche. Lorsque des tendeurs de longueur uniforme sont utilisés la distance de leur fixation par rapport au bord longitudinal libre de la bâche peut également être uniforme.

Le fait de fixer les tendeurs à distance du bord longitudinal libre de la bâche permet de disposer à l'extrémité libre de la bâche, c'est-à-dire l'extrémité tournée vers les chariots dérouleurs, un pan de bâche qui n'est pas soumis à la tension et qui peut être mis à profit pour constituer, par exemple une poche de collecte de fruits. Ce pan de bâche peut être pourvu ou non de nervures de tension. Si les nervures de tension se prolongent sur le pan de bâche s'étendant entre la fixation des tendeurs et le bord longitudinal libre, ces nervures de tension ne sont pas soumises à la tension des tendeurs. En effet la tension appliquée aux nervures de tension s'exerce entre le point de fixation des tendeurs correspondants et l'enrouleur de bâche.

Les tendeurs sont fixés d'une part à la bâche et d'autre part au chariot dérouleur. En particulier, les tendeurs peuvent être fixés sur une barre de traction du chariot dérouleur, la barre de traction s'étendant de manière sensiblement parallèle à l'axe d'enroulement. Ce mode de fixation particulier permet d'ajuster facilement la tension individuelle de chaque tendeur. Il permet également un déroulement et un enroulement uniforme de la bâche tout en évitant des composantes de tension transversales aux nervures de tension.

Le ou les tendeurs peuvent être choisis parmi une sangle de tension, un câble de tension, une chaine de tension, une barre de tension, et une bride de tension élastique, par exemple une bride du type Sandow.

Selon une disposition intéressante, le chariot dérouleur peut comporter des arceaux de fixation du bord longitudinal libre de la bâche, les arceaux formant respectivement un cintre en direction de l'enrouleur et un pan d'extrémité de la bâche reçu autour du cintre formant au moins une poche de collecte de fruits.

On considère que le cintre est en direction de l'enrouleur lorsque vu de l'enrouleur il présente une forme concave.

L'utilisation du terme "cintre" concernant la partie des anneaux recevant le bord longitudinal libre de la bâche, ne préjuge pas, par ailleurs, de la forme des arceaux. Les arceaux peuvent en particulier former des boucles, et en particulier des cercles ou des cercles aplatis. Le cintre des arceaux permet de maintenir la forme de la poche de collecte de fruits et de la maintenir ouverte pour que les fruits roulant sur la bâche perpendiculairement à l'axe d'enroulement, par exemple les fruits roulant dans les "couloirs" formés par les nervures de tension, puissent y être recueillis.

Le dispositif de collecte de fruits peut comporter un réceptacle de fruits pour le déversement de fruits en fin d'enroulement de la bâche. Le réceptacle est disposé de préférence sous l'enrouleur. A cet effet le bord longitudinal libre peut être fixé aux arceaux de préférence seulement dans une partie supérieure du cintre. Ceci permet de libérer le pan d'extrémité de la bâche de la partie inférieure du cintre en fin d'enroulement et faciliter le déversement dans le réceptacle des fruits accumulés dans la poche de la bâche.

La bâche peut comporter au moins une fente pour le passage de la bâche autour d'un tronc d'arbre. Dans ce cas un chariot dérouleur peut être prévu respectivement de part et d'autre de la fente pour faciliter la mise en place de la bâche autour du tronc de l'arbre dont les fruits sont à récolter. Dans le cas de bâches très larges, plusieurs fentes peuvent être prévues pour le déploiement simultané de la bâche autour d'un alignement régulier de plusieurs arbres.

Lorsque la bâche est pourvue d'une fente pour le passage autour d'un tronc d'arbre, elle peut présenter, en outre, en une extrémité de la fente, opposée au bord longitudinal libre, un relief de déviation de fruits. Le relief peut étre une nervure ou un repli, ou une pièce rapportée souple en matière plastique formant barrage et empêchant les fruits tombés en amont de la fente, de rouler dans la fente lors de l'enroulement de la bâche.

Une ouverture pour le tronc de l'arbre peut être prévue à l'extrémité de la fente tournée vers l'enrouleur. Dans ce cas le relief s'étend de part et d'autre de cette ouverture.

La bâche peut être l'une parmi une bâche pleine et une bâche ajourée formant un filet. Une bâche sous la forme d'un filet présente l'avantage d'une plus grande légèreté. Le maillage du filet est toutefois suffisamment serré et inférieur à la dimension des fruits à récolter.

Le chariot dérouleur peut être l'un parmi un chariot à pantographe, un chariot à patins et un chariot à roues. Dans le cas d'un chariot à roues, Il peut s'agir d'un chariot mû par un opérateur, d'un chariot à moteur ou d'un chariot mû par des rubans pousseurs actionnés depuis une machine agricole équipée du dispositif de collecte de fruits. Dans le cas d'un chariot à pantographe, le pantographe est également actionné depuis la machine agricole équipée du dispositif de collecte de fruits.

Plusieurs chariots dérouleurs solidaires ou non les uns des autres peuvent être prévus sur le bord longitudinal libre de la bâche. La désignation du ou des chariots au pluriel ou au singulier dans la description ne préjuge pas du nombre de chariots dérouleurs mis en œuvre.

Il convient de noter que le chariot dérouleur a une fonction de déroulage de la bâche mais aussi une fonction de maintien de la tension le long des nervures de tension lors de l'enroulage de la bâche, sachant que les tendeurs sont reliés au chariot dérouleur.

Aussi les chariots dérouleurs sont ramenés de préférence vers l'enrouleur sous l'effet de l'enroulement de la bâche ou pour le moins au fur et mesure de l'enroulement.

La bâche peut comporter au moins un raidisseur longiligne formant un angle non nul par rapport à la nervure de tension. L'angle peut en particulier être un angle voisin d'un l'angle droit.

En d'autres termes, la bâche peut comporter au moins un raidisseur longiligne s'étendant parallèlement à l'axe d'enroulement, c'est-à-dire de manière sensiblement perpendiculaire aux nervures de tension.

Les raidisseurs longilignes ont pour principale fonction de garantir un déploiement uniforme de la bâche, tout en évitant des replis. Ils sont utiles en particulier lorsque la bâche est une bâche légère.

De préférence, le raidisseur longiligne peut s'étendre respectivement entre deux nervures de tension sans les croiser, une distance étant ménagé entre des extrémités du raidisseur longiligne et lesdites nervures de tensions entre lesquelles s'étend le raidisseur longiligne.

Le fait de ne pas croiser les nervures de tension permet d'éviter que le raidisseur longiligne ne gêne le soulèvement de la bâche le long des nervures de tension.

Par ailleurs le fait qu'une distance soit ménagée entre les extrémités du raidisseur longiligne et les nervures de tension, permet à la bâche de se soulever facilement depuis l'extrémité des raidisseurs longilignes jusqu'aux nervures de tension. Cette mesure accentue ainsi la formation de "couloirs" de réception de fruits s'étendant perpendiculairement à l'axe d'enroulement.

La distance ménagée entre les extrémités des raidisseurs longilignes et les nervures de tension peut être de quelques centimètres à quelques dizaines de centimètre et dépend de l'accentuation que l'on veut donner au relief de la bâche entre le fond des "couloirs" et les nervures de tension.

Le ou les raidisseurs longilignes peuvent comporter au moins l'un parmi une bande de matière plastique solidaire de la bâche, par exemple cousue ou thermocoliée, un repli cousu de la bâche, et un jonc contenu dans un fourreau ajusté et solidaire de la bâche, Le fourreau peut être également cousu ou thermocolié sur la bâche. Il est de préférence ajusté sur le diamètre et la longueur du jonc.

Le dispositif de fixation du bord longitudinal libre de la bâche, c'est-à-dire le dispositif de fixation de la bâche sur le ou les chariots dérouleurs peut comporter au moins l'une parmi une fixation par pinces, une fixation par tringle, et une fixation par œillets. Lorsque le dispositif de fixation comporte des arceaux tels que mentionnés précédemment les fixations ci-dessus sont de préférence solidaires des arceaux, dans une partie supérieure du cintre.

L'invention concerne également une machine agricole de collecte de fruits comprenant un dispositif de collecte tel que décrit précédemment. La machine agricole de collecte de fruits peut être l'une parmi une machine automotrice et une machine tractée.

Dans le cas d'une machine tractée, elle peut être adjointe à un tracteur agricole avec une prise de force pour l'entrainement de l'enrouleur de bâche et des chariots dérouleurs.

L'utilisation de la machine agricole de collecte de fruit est de préférence combinée avec l'utilisation d'engins de secouage mobiles et autonomes susceptible de circuler sur la bâche lorsqu'elle est déployée dans sa position de récolte de fruits.

La machine agricole de collecte de fruits peut comporter, en outre, au moins l'un parmi un convoyeur de fruits, un crible de sélection de fruits et une unité de conditionnement de fruits. Ces équipements sont connectés de préférence à un réceptacle pour fruits du dispositif de collecte disposé sous l'enrouleur de bâche.

D'autos caractéristiques et avantages de l'Invention ressortent de la description qui suit, en référence aux figures des dessins. Cette description est donnée à titre purement illustratif et non limitatif.

### Brève description des figures

La figure 1 est une représentation schématique d'une machine agricole connue, pourvue d'un dispositif à bâche, de collecte de fruits et associée à des engins secoueurs.
La figure 2 est une représentation schématique vue de dessus d'un dispositif à bâche de collecte de fruits dans une configuration de collecte de fruits.
Les figures 3 et 4 sont des coupes montrant des possibilités de réalisation d'un détail du dispositif de la figure 2.
La figure 5 est une vue latérale du dispositif de la figure 2, incorporant une vue schématique d'un dispositif à tambour moteur et rubans pousseurs pour le déploiement des chariots.
La figure 6 est une vue du côté des chariots du dispositif de la figure 5, la bâche de collecte étant étendue au sol, autour d'un arbre, dans une configuration de collecte de fruits.
La figure 7 est une section transversale du dispositif de la figure 2 selon un plan A-A indiqué sur la figure 5.
La figure 8 est une représentation schématique vue de dessus d'un autre dispositif à bâche de collecte de fruits conforme à l'invention, avec une bâche de collecte de fruits étendue au sol dans une configuration de collecte de fruits et constituant une variante par rapport au dispositif de la figure 2.
La figure 9 est une vue du côté des chariots du dispositif de la figure 8, la bâche de collecte étant étendue au sol, autour d'un arbre, dans une configuration de collecte de fruits.
La figure 10 est une coupe transversale du dispositif de la figure 8 selon un plan B-B.

### Description détaillée de modes de mise en œuvre de l'invention.

Dans la description qui suit, des parties identiques similaires ou équivalentes des différentes figures sont repérés avec les mêmes signes de référence de manière à pouvoir se reporter d'une figure à l'autre.

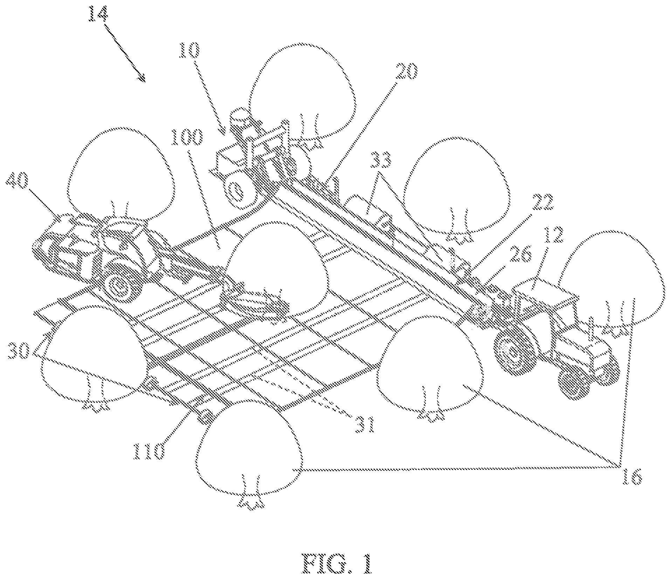

La figure 1 montre une machine agricole 10 de collecte de fruits connue.

Il s'agit d'une machine tractée, attelée à un tracteur agricole 12.

Elle évolue dans un verger 14 avec un alignement d'arbres 16.

La machine, montée sur roues comprend un dispositif de collecte de fruits 20 pourvu pour l'essentiel d'une bâche 100, d'un enrouleur de bâche 22 motorisé et de chariots dérouleurs 30 à roues, solidaires d'un bord longitudinal libre 110 de la bâche.

La bâche présente une fente, et est disposée autour d'un arbre 16 à récolter. Le déploiement de la bâche a lieu, par l'intermédiaire des chariots dérouleurs 30 en tirant sur son bord longitudinal libre 110. Les chariots dérouleurs 30 sont mus par des rubans pousseurs 31, actionnés par la machine de récolte et passant sous la bâche. Les rubans pousseurs 31, cachés par la bâche 100 sont représentés en trait discontinu. Ils sont déroulés par des tambours moteurs 33.

Lorsque la bâche est étendue au sol autour d'un arbre, des engins secoueurs mobiles et autonomes 40 pourvus d'un puissant bras d'actionnement, sont mis en œuvre pour venir secouer l'arbre 16 entouré par la bâche 100. Le bras est utilisé pour secouer les arbres et en faire tomber les fruits. Les fruits sont recueillis sur la bâche 100. On peut observer que les engins secoueurs 40 sont susceptibles de circuler sur la bâche 100. Un secouage manuel ou un gaulage manuel, ou un secouage avec un équipement de secouage portable peut se substituer à l'utilisation d'engins secoueurs ou la compléter.

Après le secouage de l'arbre ou le gaulage de ses fruits, la bâche 100. est enroulée sur l'enrouleur 22. Au cours de cette opération les fruits présents sur la bêche sont acheminés vers le dispositif de collecte 20 et sont déversés dans un réceptacle longitudinal 26 s'étendant le long de l'enrouleur 22 et sous l'enrouleur.

Comme évoqué précédemment l'usage d'un tel dispositif peut occasionner des pertes de fruits quittant latéralement la bâche, ou peut occasionner des difficultés de passage des fruits au-dessus de l'enrouleur 22 vers le réceptacle.

La configuration générale de la machine de collecte de fruits de l'invention s'apparente également à celle décrite en référence à la figure 1. Des particularités propres à l'invention ressortent toutefois des figures suivantes.

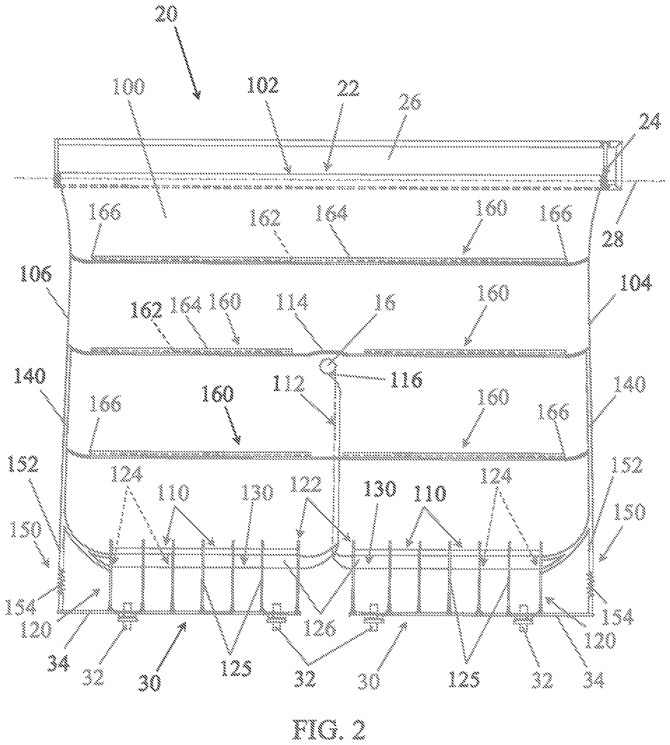

La figure 2 montre une vue de dessus d'une première réalisation d'un dispositif à bâche de collecte de fruits 20 conforme à l'invention susceptible d'équiper une machine agricole de collecte 10 telle que visible à la figure 1. Certaines parties du dispositif comme, par exemple, les rubans pousseurs 31 et leurs tambours moteurs 33, visibles sur la figure 1, sont retirés de la figure 2, par simplification.

Par retour à la figure 2, un enrouleur de bâche 22 pourvu d'un tambour d'enroulement 24 motorisé est monté au-dessus d'un réceptacle 26 de fruits. L'enrouleur de bâche s'étend selon un axe d'enroulement 28.

Une bâche 100 est associée à l'enrouleur de bâche 22. La bâche 100 présente un bord longitudinal d'enroulement 102 rectiligne fixé au tambour 24. La fixation peut être une fixation par vis, par l'intermédiaire d'œillets, par l'intermédiaire d'un jonc reçu dans un fourreau et maintenu par des pinces solidaires du tambour, ou par tout autre mécanisme de fixation autorisant le remplacement de la bâche lorsqu'elle est usée ou déchirée.

La bâche 100, de forme sensiblement rectangulaire présente également des bords latéraux 104, 106, perpendiculaires au bord longitudinal d'enroulement 102 et s'étendant depuis le bord longitudinal d'enroulement jusqu'à un bord longitudinal libre 110.

Le bord longitudinal libre 110 est perpendiculaire aux bords latéraux 104, 106, et parallèle au bord longitudinal d'enroulement 102. Il est également parallèle à l'axe d'enroulement 28.

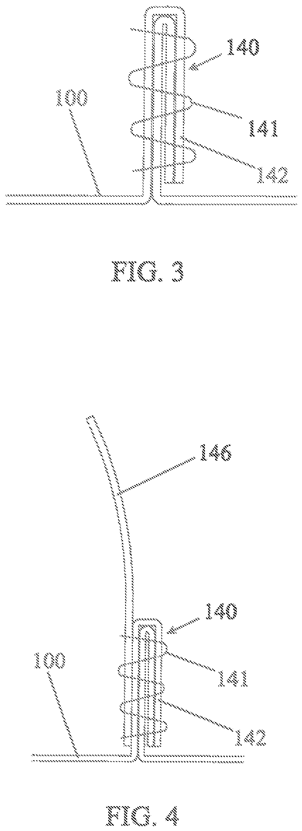

Des chariots dérouleurs moteurs 30. pourvus de roues 32 sont reliés au bord longitudinal libre 110. Plus précisément deux chariots sont reliés au bord longitudinal libre 110 de part et d'autre d'une fente 112 de passage d'arbre. La fente de passage d'arbre 112 se termine par un trou 116 pour le tronc d'un arbre 16 et un barrage 114 anti-pertes, cousu en relief sur la bâche. Le barrage 114 est formé d'une bande de manière plastique souple. Il peut également être formé d'une manière telle que décrite ultérieurement en référence aux figures 3 et 4.

Un dispositif de fixation 120 du bord longitudinal libre 110 de la bâche comprend une pluralité d'arceaux 122 formant des cintres 124. Un pan d'extrémité 126 de la bâche 110 au voisinage du bord longitudinal libre 110 est reçu autour du cintre 124 des arceaux 122 de manière à former une poche 130 de collecte de fruits. Plus précisément une poche 130 est formée de chaque côté de la fente de passage d'arbre 112.

Le long de chaque bord latéral 104, 106 de la bâche est prévue une nervure de tension 140.

Comme le montre en coupe la figure 3, la nervure peut être formée par un repli 142 de la bâche, maintenu par une couture 141. Il s'agit, par exemple, d'un ourlet double rabattu. La nervure présente ainsi une rigidité supérieure à celle de la bâche.

La nervure peut aussi comporter une pièce rapportée, telle qu'une sangle ou une bande 146 cousue sur la bâche. Une illustration en est donnée par la figure 4. La bande rapportée est, par exemple une bande en un matériau plastique souple, tel que le polyuréthane. Cette configuration permet d'élever une barrière sur une hauteur plus importante que celle de la nervure.

Les coutures 141 sont de préférence réalisées sur un côté de la bâche qui ne touche pas le sol, et donc qui ne frotte pas sur le sol, de manière à en augmenter la pérennité.

Par retour à la figure 2 on peut noter que les nervures de tension s'étendent depuis le bord longitudinal libre 110 en direction du bord longitudinal d'enroulement 102. Elles ne s'étendent pas nécessairement sur toute la longueur de la bâche et peuvent s'arrêter avant le bord longitudinal d'enroulement 102, comme le montre la figure 2.

Les nervures de tension sont reliées à une barre de traction 34 des chariots dérouleurs 30 s'étendant parallèlement à l'axe d'enroulement 28. Elles y sont reliées par l'intermédiaire de tendeurs 150. Dans l'exemple de la figure 2 les tendeurs 150 sont formés d'une association d'une sangle 152 qui se prolonge pour former la nervure de tension 140 correspondante et d'un brin élastique 154. Le brin élastique peut être remplacé par un ressort de traction métallique. Les tendeurs peuvent aussi être formés par une sangle dont l'élasticité est suffisante.

La tension exercée par les tendeurs 150 sur les nervures de tension 140 par l'intermédiaire de la barre de traction 34 des chariots dérouleurs a pour effet de relever les bords de la bâche et constituer ainsi une cuvette, qui s'étend sur tout ou partie de la longueur de la bâche en direction du bord d'enroulement.

La cuvette permet de contenir les fruits lors de l'enroulement de la bâche et évite qu'ils ne quittent la bâche par les bords latéraux 104, 106.

La bâche comprend en outre des raidisseurs longilignes 160 s'étendant de parallèlement à l'axe d'enroulement 28. Les raidisseurs longilignes sont formés par des joncs flexibles 162 contenus dans des fourreaux ajustés 164 cousus sur la bêche. Ils peuvent également être formé comme le barrage anti-perte, d'une manière telle que décrite précédemment en référence aux figures 3 et 4. Les extrémités 166 des raidisseurs 160 sont maintenues à distance des nervures de tension 140, pour accentuer encore l'effet de cuvette produit par la mise sous tension des nervures de tension 150.

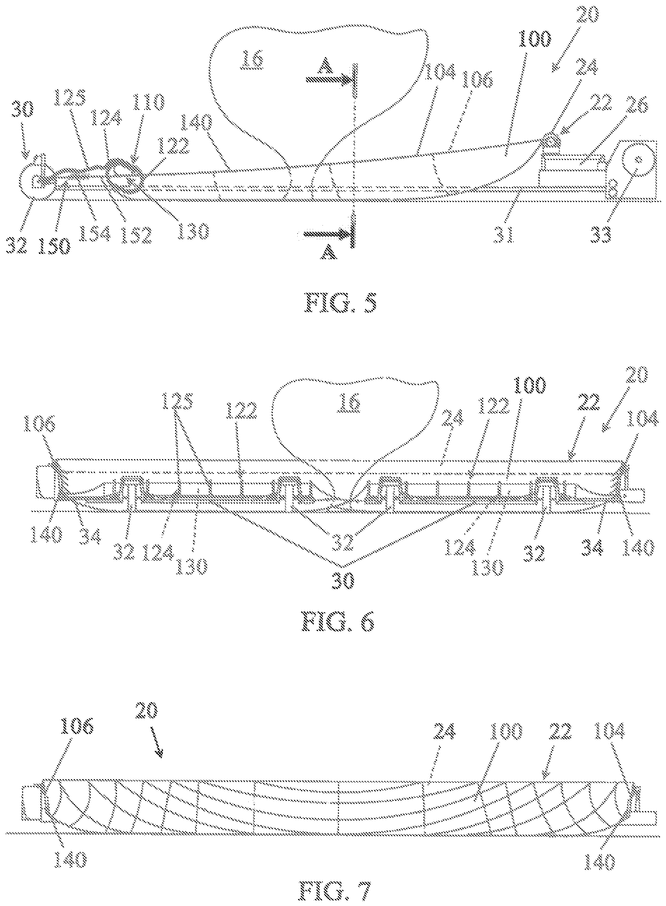

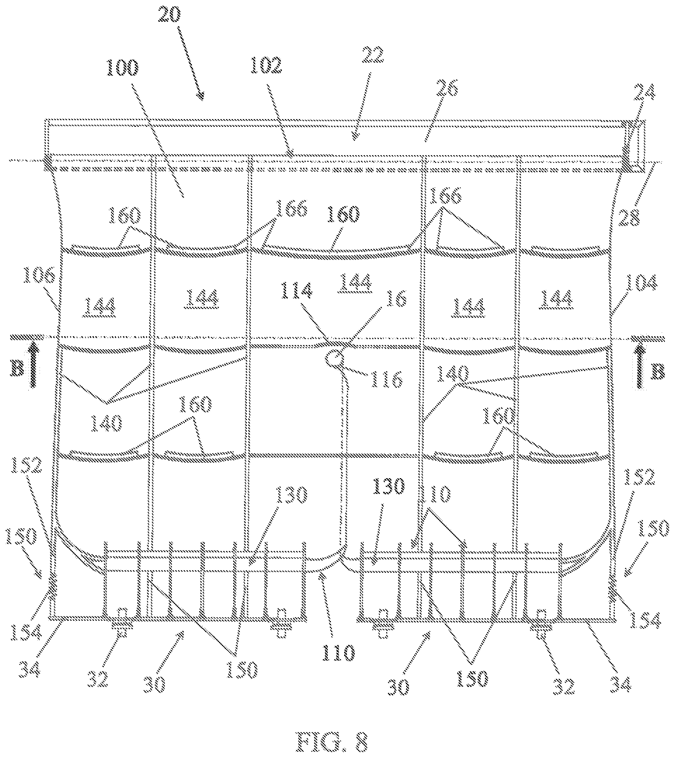

La forme en cuvette de la bâche 110 est mieux visible sur la figure 5 qui est une vue latérale du dispositif de collecte 20. Elle apparaît également sur les figures 6 et 7. La figure 8 est une vue longitudinale du côté des chariots dérouleurs. Elle montre la bâche formant une cuvette de part et d'autre d'un arbre 16. La figure 7 est une coupe selon un plan A-A passant entre l'arbre 16 et le tambour d'enroulement 24. Elle montre bien la forme de cuvette de la bâche entre ses bords latéraux 104,106.

La tension exercée par les tendeurs 150 est transmise aux nervures de tension 140, ce qui a pour effet de soulever la bâche du sol à l'endroit des nervures, c'est-à-dire ici les bords latéraux.

Les figures 5 et 6 montrent également les poches 130 formées par un pan d'extrémité de la bâche autour du cintre 124 des arceaux 122.

Les arceaux présentent la forme d'une boucle dont la partie tournée vers les chariots dérouleurs 30 forme le cintre 124. Les arceaux sont reliés à un train de roulage des chariots dérouleurs 30 par des bras 125.

Enfin, la figure 5 montre des rubans pousseurs 31 reçus sur un tambour moteur 33 et reliés aux chariots dérouleurs 30. Les rubans sont utilisés pour pousser les chariots à distance des tambours moteurs 33 pour permettre le déploiement de la bâche. Ils peuvent être remplacés par un moteur intégré aux chariots dérouleurs ou par un système à pantographe. Il convient de noter que les rubans pousseurs sont omis sur les figures 2 et 6 à 10 pour des raisons de simplification.

La figure 8 est une vue de dessus d'une variante de réalisation du dispositif de récolte 20 et notamment de la bâche 100. Un grand nombre de caractéristiques du dispositif de la figure 8 sont similaires ou comparables à celles du dispositif de la figure 2 et on pourra se reporter à la description correspondante.

On peut noter que la bâche 100 de la figure 8 comprend non seulement des nervures de tension 140 le long des bords latéraux 104, 106, mais aussi des nervures de tension 140 intermédiaires entre les bords latéraux.

Dans l'exemple de la figure 8, 6 nervures de tension s'étendent parallèlement les unes aux autres et perpendiculairement à l'axe d'enroulement 28.

Un angle peut toutefois être donné aux nervures dans une configuration non pas strictement parallèle mais en léger éventail.

Dans l'exemple illustré, les 4 nervures centrales s'étendent depuis le bord longitudinal libre 110 jusqu'au bord longitudinal d'enroulement 102.

Les nervures de tension 140 situées sur le corps de la bâche sont reliées aux barres de traction 34 par des tendeurs 150 sous la forme de sangles. On peut observer que les tendeurs sont reliés aux nervures de tension 140 à distance du bord longitudinal libre 110 de manière à ne pas mettre sous tension et ne pas contraindre un pan d'extrémité de la bâche utilisé pour former les poches 130.

Les tendeurs 150 des nervures de tension 140 s'étendant le long des bords latéraux 104, 106 sont réalisés par une mise en série de sangles 152 et de brins élastique 154 de manière à garantir une tension légèrement supérieure et constante aux nervures de tension des bords latéraux. Ceci permet d'offrir une garantie supplémentaire contre un franchissement des bords latéraux par les fruits collectés sur la bâche 110.

Le fait de pourvoir la bâche d'un plus grand nombre de nervures de tension permet de former non pas une cuvette unique, mais une pluralité de cuvettes ou "couloirs 144" de collecte de fruits. Ces couloirs 144 s'étendant perpendiculairement à l'axe d'enroulement 28, entre les nervures de tension et sont provoqués par un soulèvement local de la bâche 100 par les nervures de tension.

Les couloirs intermédiaires permettent de réduire le nombre de fruits atteignant les bords latéraux 104, 106 de la bâche 100. Ils contribuent ainsi également à réduire un risque de perte de fruits par ces bords.

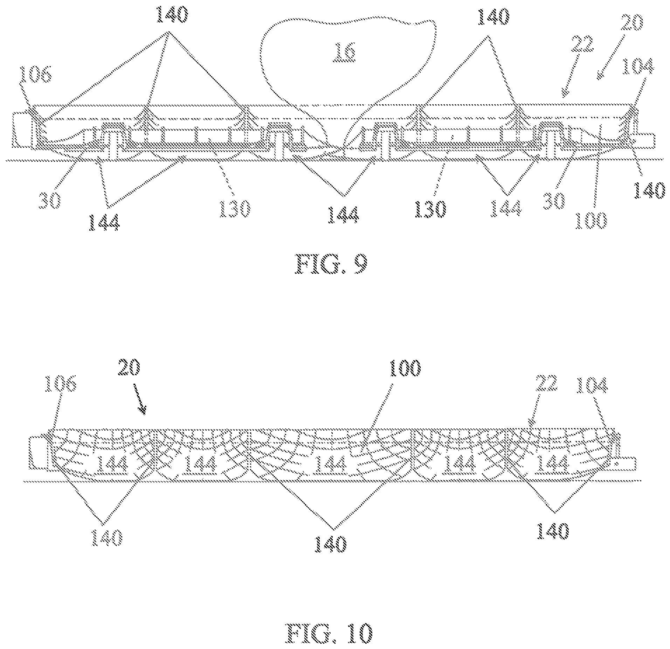

La figure 10 est une coupe de la bâche 100 selon un plan B-B indiqué sur la figure 8. Elle permet de mieux voir le soulèvement de la bâche 100 à fendrait des nervures de tension 140 et les couloirs 144 formés.

La figure 9, qui est une vue du dispositif du côté des chariots, montre aussi cet effet.

Par retour à la figure 8 on peut observer la présence de raidisseurs longilignes 160 s'étendant sur la bâche, transversalement au sens de déroulement ou d'enroulement, c'est-à-dire parallèlement à l'axe d'enroulement 28.

Les raidisseurs sont solidaires de la bâche 100 et y sont disposés de manière à ne pas croiser ni chevaucher les nervures de tension 140.

Par ailleurs la longueur des raidisseurs est prévue pour être Inférieure à la largeur des couloirs 144 dans lesquels ils se trouvent lorsque la bâche est tendue.

Les extrémités 166 des raidisseurs longilignes 160 ne touchent pas les nervures de tension mais en sont légèrement distants de manière à ne pas entraver la formation des couloirs 144, mais d'y contribuer en maintenant en contact du sol des parties de la bâche qui ne sont pas parcourues par les nervures de tension.

## Revendications

1. Dispositif (20) de collecte de fruits comprenant :
- un enrouleur de bâche (22), agencé selon un axe d'enroulement (28)
- au moins une bâche (100) avec un bord longitudinal d'enroulement (102) relié à l'enrouleur de bâche (22) et s'étendant parallèlement à l'axe d'enroulement, et un bord longitudinal libre (110), opposé au bord longitudinal d'enroulement, et des bords latéraux (104, 106) s'étendant entre le bord longitudinal d'enroulement et le bord longitudinal libre, la bâche (100) pouvant être sélectivement enroulée sur l'enrouleur et déployée au sol dans une position de récolte de fruits,
- au moins un chariot dérouleur (30), le chariot dérouleur étant pourvu d'un dispositif de fixation (120, 122, 124, 125) du bord longitudinal libre de la bâche,
- au moins une nervure de tension (140) de la bâche, s'étendant le long de la bâche, entre le bord longitudinal d'enroulement (102) et le bord longitudinal libre (110),
**caractérisé en ce que** la nervure de tension est fixée au chariot dérouleur par l'intermédiaire respectivement d'un tendeur (150, 152, 154) distinct du dispositif de fixation du bord longitudinal libre de la bâche.

2. Dispositif selon la revendication 1, comprenant une pluralité de nervures de tension (140) s'étendant parallèlement aux bords latéraux (104, 106) de la bâche (100) et perpendiculairement à l'axe d'enroulement (28) lorsque la bâche est dans une position de récolte de fruits.

3. Dispositif selon la revendication 1 ou 2, comprenant une nervure de tension (140) s'étendant le long de chaque bord latéral (104, 106) de la bâche.

4. Dispositif selon la revendication 3, dans lequel la nervure de tension (140) s'étendant le long de chaque bord latéral de la bâche est reliée au chariot dérouleur respectivement par un tendeur élastique (150, 154).

5. Dispositif selon l'une quelconque des revendications précédentes, dans lequel la nervure de tension (140) comprend au moins l'un parmi une couture (144) de la bâche, un repli de la bâche, une sangle (152) solidaire de la bâche, une bande (146) de matière plastique solidaire de la bâche, un ourlet (142) de la bâche, et une armature (146) de la bâche.

6. Dispositif selon l'une quelconque des revendications précédentes, dans lequel le tendeur (150) est relié à la nervure de tension (140) à distance du bord longitudinal libre (110) de la bâche.

7. Dispositif selon l'une quelconque des revendications précédentes, dans lequel le tendeur (150) est fixé sur une barre de traction (34) du chariot dérouleur (30), la barre de traction s'étendant de manière sensiblement parallèle à l'axe d'enroulement (28).

8. Dispositif selon l'une quelconque des revendications précédentes, dans lequel le chariot dérouleur comporte des arceaux de fixation (122) du bord longitudinal libre (110) de la bâche (100), les arceaux formant respectivement un cintre (124) en direction de l'enrouleur et un pan d'extrémité de la bâche reçu autour du cintre formant au moins une poche (130) de collecte de fruits.

9. Dispositif selon l'une quelconque des revendications précédentes, comprenant un réceptacle (26) de fruits pour le déversement de fruits en fin d'enroulement de la bâche (100).

10. Dispositif selon l'une quelconque des revendications précédentes, dans lequel la bâche (100) comprend au moins une fente (112) pour le passage de la bâche autour d'un arbre (16).

11. Dispositif selon la revendication 10, dans lequel la bâche présente en une extrémité de la fente (112), opposée au bord longitudinal libre (110), un relief (114) de déviation de fruits.

12. Dispositif selon l'une quelconque des revendications précédentes, dans lequel la bâche (100) est l'une parmi une bâche pleine et une bâche ajourée formant un filet.

13. Dispositif selon l'une quelconque des revendications précédentes, dans lequel le chariot dérouleur (30) est l'un parmi un chariot à pantographe et un chariot à roues (32).

14. Dispositif selon l'une quelconque des revendications précédentes dans lequel la bâche comprend au moins un raidisseur longiligne (160) formant un angle non nul par rapport à la nervure de tension (140).

15. Dispositif selon la revendication 14, comprenant au moins un raidisseur longiligne (160) s'étendant parallèlement à l'axe d'enroulement (28).

16. Dispositif selon l'une quelconque des revendications 14 ou 15, dans lequel le raidisseur longiligne (160) s'étend respectivement entre deux nervures de tension (140) sans les croiser, une distance étant ménagée entre des extrémités (166) du raidisseur longiligne et lesdites les nervures de tension entre lesquelles s'étend le raidisseur.

17. Dispositif selon l'une quelconque des revendications 14 à 16, dans lequel le raidisseur longiligne (160) comprend au moins l'un parmi une bande de matière plastique solidaire la bâche, un repli cousu de la bâche, et un jonc contenu dans un fourreau ajusté solidaire de la bâche.

18. Dispositif selon l'une quelconque des revendications précédentes, dans lequel le dispositif de fixation du bord longitudinal libre de la bâche comprend au moins l'une parmi une fixation par pinces, une fixation par tringle, et une fixation par œillets.

19. Dispositif selon l'une quelconque des revendications précédentes, dans lequel le tendeur (150) est choisi parmi une sangle de tension (152), un câble de tension, une chaine de tension, une barre de tension, et une bride de tension élastique (154).

20. Machine agricole (10) de collecte de fruits comprenant un dispositif de collecte (20) selon l'une quelconque des revendications précédentes, la machine agricole de récolte de fruits étant l'une parmi une machine automotrice et une machine tractée.

## Patentansprüche

1. Vorrichtung (20) zum Ernten von Obst, umfassend :
- eine Planenaufwickelvorrichtung (22), die entlang einer Wickelachse (28) angeordnet ist,
- mindestens eine Plane (100) mit einem länglichen Rand zum Aufwickeln (102), der mit der Planenaufwickelvorrichtung (22) verbunden ist und sich parallel zur Wickelachse erstreckt, und einem freien länglichen Rand (110), der dem länglichen Rand zum Aufwickeln gegenüberliegt, und Seitenrändern (104, 106), die sich zwischen dem länglichen Rand zum Aufwickeln und dem freien länglichen Rand erstrecken, wobei die Plane (100) selektiv auf die Aufwickelvorrichtung aufgewickelt und auf dem Boden in einer Position zum Aufsammeln von Obst eingesetzt werden kann,
- mindestens einen Abwickelschlitten (30), wobei der Abwickelschlitten mit einer Vorrichtung zum Befestigen (120, 122, 124, 125) des freien länglichen Randes der Plane versehen ist,
- mindestens eine Spannrippe (140) der Plane, die sich der Länge der Plane nach zwischen dem länglichen Rand zum Aufwickeln (102) und dem freien länglichen Rand (110) erstreckt,
**dadurch gekennzeichnet, dass** die Spannungsrippe jeweils mittels einer von der Vorrichtung zum Befestigen des freien länglichen Randes der Plane separaten Spannvorrichtung (150, 152, 154) am Abwickelschlitten befestigt ist.

2. Vorrichtung nach Anspruch 1, umfassend eine Vielzahl von Spannrippen (140), die sich parallel zu den Seitenrändern (104, 106) der Plane (100) und senkrecht zur Wickelachse (28) erstrecken, wenn die Plane in einer Position zum Aufsammeln von Obst ist.

3. Vorrichtung nach Anspruch 1 oder 2, umfassend eine Spannrippe (140), die sich der Länge jedes Seitenrandes (104, 106) der Plane nach erstreckt.

4. Vorrichtung nach Anspruch 3, wobei die Spannrippe (140), die sich der Länge jedes Seitenrandes der Plane nach erstreckt, jeweils über eine elastische Spannvorrichtung (150, 154) mit einem Abwickelschlitten verbunden ist.

5. Vorrichtung nach einem der vorhergehenden Ansprüche, wobei die Spannrippe (140) mindestens eines von einer Naht (144) der Plane, einer Falte der Plane, einem mit der Plane integralen Riemen (152), einem mit der Plane integralen Streifen (146) aus Kunststoffmaterial, einem Saum (142) der Plane und einer Verstärkung (146) der Plane umfasst.

6. Vorrichtung nach einem der vorhergehenden Ansprüche, wobei die Spannvorrichtung (150) mit der vom freien länglichen Rand (110) der Plane entfernten Spannrippe (140) verbunden ist.

7. Vorrichtung nach einem der vorhergehenden Ansprüche, wobei die Spannvorrichtung (150) an einer Zugstange (34) des Abwickelschlittens (30) befestigt ist, wobei die Zugstange sich im Wesentlichen parallel zur Wickelachse (28) erstreckt.

8. Vorrichtung nach einem der vorhergehenden Ansprüche, wobei der Abwickelschlitten Befestigungsbügel (122) des freien länglichen Randes (110) der Plane (100) aufweist, wobei die Bügel jeweils einen Aufhänger (124) in Richtung der Aufwickelvorrichtung und einen Endabschnitt der Plane, die um den Aufhänger aufgenommen wird, bilden, wobei mindestens eine Tasche (130) zum Ernten von Obst gebildet wird.

9. Vorrichtung nach einem der vorhergehenden Ansprüche, umfassend einen Behälter (26) für Obst zur Aufnahme von Obst am Ende des Aufwickelns der Plane (100) .

10. Vorrichtung nach einem der vorhergehenden Ansprüche, wobei die Plane (100) mindestens einen Schlitz (112) zum Hindurchführen der Plane um eine Welle (16) umfasst.

11. Vorrichtung nach Anspruch 10, wobei die Plane an einem Ende des Schlitzes (112), gegenüber dem freien länglichen Rand (110), ein Relief (114) für die Abzweigung von Obst aufweist.

12. Vorrichtung nach einem der vorhergehenden Ansprüche, wobei die Plane (100) eine aus einer festen Plane oder einer perforierten Plane, die ein Netz bildet, ist.

13. Vorrichtung nach einem der vorhergehenden Ansprüche, wobei der Abwickelwagen (30) eines aus einem Stromabnehmerwagen oder einem Wagen mit Rädern (32) ist.

14. Vorrichtung nach einem der vorhergehenden Ansprüche, wobei die Plane mindestens eine langgestreckte Versteifung (160) umfasst, die in Bezug zu der Spannrippe (140) einen Winkel ungleich Null bildet.

15. Vorrichtung nach Anspruch 14, umfassend mindestens eine langgestreckte Versteifung (160), die sich parallel zur Wickelachse (28) erstreckt.

16. Vorrichtung nach einem der Ansprüche 14 oder 15, wobei sich die langgestreckte Versteifung (160) jeweils zwischen zwei Spannrippen (140) erstreckt, ohne sie zu kreuzen, wobei ein Abstand zwischen den Enden (166) der langgestreckten Versteifung und den Spannrippen, zwischen denen sich die Versteifung erstreckt, vorgesehen ist.

17. Vorrichtung nach einem der Ansprüche 14 bis 16, wobei die langgestreckte Versteifung (160) mindestens einen mit der Plane integralen Streifen aus Kunststoffmaterial, eine genähte Falte der Plane und einen Stab, der in einer an der Plane angebrachten passenden Hülle enthalten ist, umfasst.

18. Vorrichtung nach einem der vorhergehenden Ansprüche, wobei die Vorrichtung zum Befestigen des freien länglichen Randes der Plane eine Befestigung durch Klammern und/oder eine Befestigung durch eine Stange und/oder eine Befestigung durch Ösen umfasst.

19. Vorrichtung nach einem der vorhergehenden Ansprüche, wobei die Spannvorrichtung (150) ausgewählt ist aus einem Spannriemen (152), einem Spannseil, einer Spannkette, einem Spannstab und einem elastischen Spanngurt (154).

20. Landwirtschaftliche Maschine (10) zum Ernten von Obst, umfassend eine Erntevorrichtung (20) nach einem der vorhergehenden Ansprüche, wobei die landwirtschaftliche Maschine zum Ernten von Obst eine aus einer selbstfahrenden Maschine oder einer gezogenen Maschine ist.

## Claims

1. A fruit collection device (20) comprising:
- a tarpaulin winder (22), arranged along a winding axis (28)
- at least one tarpaulin (100) with a longitudinal winding edge (102) connected to the tarpaulin winder (22) and extending parallel to the winding axis, and a free longitudinal edge (110), opposite the longitudinal winding edge, and lateral edges (104, 106) extending between the longitudinal winding edge and the free longitudinal edge, the tarpaulin (100) being able to be selectively wound on the winder and deployed on the ground in a fruit harvesting position,
- at least one unwinding trolley (30), the unwinding trolley being provided with a device (120, 122, 124, 125) for fastening the free longitudinal edge of the tarpaulin,
- at least one rib (140) for tensioning the tarpaulin, extending along the tarpaulin, between the longitudinal winding edge (102) and the free longitudinal edge (110),
**characterised in that** the tension rib is fastened to the unwinding trolley via respectively a tensioner (150, 152, 154) distinct from the device for fastening the free longitudinal edge of the tarpaulin.

2. The device according to claim 1, comprising a plurality of tension ribs (140) extending parallel to the lateral edges (104, 106) of the tarpaulin (100) and perpendicular to the winding axis (28) when the tarpaulin is in a fruit harvesting position.

3. The device according to claim 1 or 2, comprising a tension rib (140) extending along each lateral edge (104, 106) of the tarpaulin.

4. The device according to claim 3, wherein the tension rib (140) extending along each lateral edge of the tarpaulin is connected to the unwinding trolley respectively by an elastic tensioner (150, 154).

5. The device according to any one of the preceding claims, wherein the tension rib (140) comprises at least one of a seam (144) of the tarpaulin, a fold of the tarpaulin, a strap (152) secured to the tarpaulin, a strip (146) of plastic material secured to the tarpaulin, a hem (142) of the tarpaulin, and a frame (146) of the tarpaulin.

6. The device according to any one of the preceding claims, wherein the tensioner (150) is connected to the tension rib (140) at a distance from the free longitudinal edge (110) of the tarpaulin.

7. The device according to any one of the preceding claims, wherein the tensioner (150) is fastened on a drawbar (34) of the unwinding trolley (30), the drawbar extending substantially parallel to the winding axis (28) .

8. The device according to any one of the preceding claims, wherein the unwinding trolley includes arches (122) for fastening the free longitudinal edge (110) of the tarpaulin (100), the arches respectively forming a hanger (124) in the direction of the winder and an end panel of the tarpaulin received around the hanger forming at least one fruit collection pocket (130).

9. The device according to any one of the preceding claims, comprising a fruit receptacle (26) for discharging fruit at the end of winding of the tarpaulin (100) .

10. The device according to any one of the preceding claims, wherein the tarpaulin (100) comprises at least one slot (112) for the passage of the tarpaulin around a shaft (16).

11. The device according to claim 10, wherein the tarpaulin has at one end of the slot (112), opposite the free longitudinal edge (110), a fruit deviation relief (114) .

12. The device according to any one of the preceding claims, wherein the tarpaulin (100) is one of a solid tarpaulin and a perforated tarpaulin forming a net.

13. The device according to any one of the preceding claims, wherein the unwinding trolley (30) is one of a pantograph trolley and a wheeled trolley (32).

14. The device according to any one of the preceding claims, wherein the tarpaulin comprises at least one elongated stiffener (160) forming a non-zero angle relative to the tension rib (140).

15. The device according to claim 14, comprising at least one elongated stiffener (160) extending parallel to the winding axis (28).

16. The device according to any one of claims 14 or 15, wherein the elongated stiffener (160) extends respectively between two tension ribs (140) without crossing them, a distance being formed between ends (166) of the elongated stiffener and said tension ribs between which the stiffener extends.

17. The device according to any one of claims 14 to 16, wherein the elongated stiffener (160) comprises at least one of a strip of plastic material secured to the tarpaulin, a sewn fold of the tarpaulin, and a retaining ring contained in a fitted sheath secured with the tarpaulin.

18. The device according to any one of the preceding claims, wherein the device for fastening the free longitudinal edge of the tarpaulin comprises at least one of a clip fastening, a rod fastening, and an eyelet fastening.

19. The device according to any one of the preceding claims, wherein the tensioner (150) is selected from a tension strap (152), a tension cable, a tension chain, a tension bar, and an elastic tension flange (154).

20. An agricultural fruit collection machine (10) comprising a collection device (20) according to any one of the preceding claims, the agricultural fruit harvesting machine being one of a self-propelled machine and a trailed machine.
